# EUROPÄISCHE PATENTSCHRIFT

(11) **EP 0 348 731 B1**
(45) Veröffentlichungstag und Bekanntmachung des Hinweises auf die Patenterteilung: **13.10.1993**
(21) Anmeldenummer: 89110734.4
(22) Anmeldetag: 14.06.1989
(51) Int. Cl.: F21V 21/10, F21V 23/00

(54) **Stahlrohrmast mit einsteckbar befestigter Tragschiene für einen Armaturblock**
Steel tube mast with affixed mounting rail for a connection block
Mât d'acier tubulaire avec rail de montage rapporté pour bloc de connexion

(30) Priorität: 25.06.1988 DE 8808198 U
(43) Veröffentlichungstag der Anmeldung: 03.01.1990
(73) Patentinhaber: PLFEIDERER VERKEHRSTECHNIK GmbH & CO. KG, 92318 Neumarkt (DE)
(72) Erfinder: Wucherpfennig, Kurt, D-8530 Neustadt (DE)
(74) Vertreter: Matschkur, Götz, Lindner Patent- und Rechtsanwälte

(56) Entgegenhaltungen:
- BE-A- 717 044
- DE-A- 3 223 819

## Beschreibung

Die Erfindung bezieht sich auf einen Stahlrohrmast mit einer Öffnung zur Montage und Wartung von Kabelanschlüssen, Sicherungen od.dgl., die als Armaturblock auf einer an der der Öffnung gegenüberliegenden Innenwand einsteckbar befestigten, vorzugsweise als Norm-C-Schiene ausgebildeten Tragschiene über Schiebemuttern montiert sind, wobei ein Erdungsbügel in das untere Tragschienenende eingreift.

Bei den bislang üblichen Stahlrohrmasten mit angebauten Armaturen ist ein Z-förmig gewinkelter Erdungsbügel mit seinem einen Schenkel in den Stahlrohrmast eingeschweißt, um das untere Ende der Tragschiene haltend aufzunehmen, wie zum Beispiel im Dokument BE 717 044. Das obere Ende ist hinter einem ebenfalls eingeschweißten U-Bügel gehaltert. Zur Befestigung wird zunächst die Tragschiene durch den oberen U-Bügel nach oben geschoben und dann beim Herunterziehen auf das vor der Innenwand liegende Ende des Erdungsbügels aufgesteckt. Diese Konstruktion bringt jedoch eine Reihe von erheblichen Fertigungs- und Montageschwierigkeiten mit sich.

Das erste Problem besteht darin, daß sowohl der Erdungsbügel als auch der U-förmige obere Haltebügel - um einen großen Platz dazwischen zu haben, so daß auch größere Armaturblöcke eingesetzt werden können - möglichst einen größeren Abstand voneinander aufweisen sollen als die Längserstreckung der Öffnung des Stahlrohrmastes. Dies erschwert aber das Einschweißen dieser Teile ganz erheblich. Noch wesentlich umständlicher ist diese Art der Montage, da es nach dem Verzinken nicht nochmals erforderlich ist, die ganzen Masten zum Nachschneiden der Gewinde zu bringen, was ganz erhebliche Transportkosten bedeutet. Schließlich ergibt sich aber auch eine Begrenzung der Gesamtlänge der einzusetzenden Armaturenblöcke, die keinesfalls länger sein können als der Abstand des Erdungsbügels vom oberen U-fömigen Haltebügel, da ja nur zwischen diesen eine Verschiebung der den Amaturenblock halternden Schiebemuttern möglich ist. Schließlich ist auch die Tatsache ungünstig, daß die Erdungsschraube senkrecht zur Rohrachse in den Erdungsbügel, der wegen seiner Halterungsfunktion für die C-Schiene nicht anders angeordnet sein kann, eingeschraubt werden muß, so daß entweder der Bügel im Bereich der Öffnung des Stahlrohrmastes liegen muß, was die Länge des Armaturenblocks noch weiter begrenzt, oder aber die Zugänglichkeit für einen Schraubendreher sehr schwierig und unhandlich ist.

Der Erfindung liegt daher die Aufgabe zugrunde, einen Stahlrohrmast der eingangs genannten Art so auszugestalten, daß er einfacher hergestellt werden kann und gleichzeitig bei vereinfachter Montage größere Armaturblöcke als bisher durch eine vorgegebene Öffnung eingesetzt und gewartet werden können.

Zur Lösung dieser Aufgabe ist erfindungsgemäß vorgesehen, daß die Tragschiene auf zwei beabstandet in das Rohr eingeschweißten Bolzen gehaltert ist, wobei der untere Bolzen gleichzeitig den als loses Bauteil in die Schiene eingeschobenen Erdungsbügel halternd durchsetzt, vorzugsweise in der Weise, daß die Tragschiene mittels auf die sie in Ausnehmungen, von denen eine als Langloch ausgebildet ist, durchsetzenden Bolzen aufgesteckten Klemmelementen gehaltert ist.

Durch die erfindungsgemäße Befestigung ergeben sich zunächst von vorneherein wesentlich einfachere Schweißarbeiten, da das Aufschweißen eines senkrecht von der Innenwand des Stahlrohrmastes abstehenden Bolzens sehr viel einfacher ist als das Aufschweißen der Erdungsbügel und der U-fömigen Haltebügel. Dies gilt um so mehr, als die Bolzen ja nicht wie die bisher üblichen Montageteile an den Enden angeordnet sein müssen, sondern bequem zugänglich in Abstand von den oberen und unteren Begrenzungen der Fenster-Öffnung des Stahlrohrmastes angeordnet werden können. Dadurch, daß bei der erfindungsgemäßen Konstruktion die Erdungsbügel lose Bauteile sein können, die erst mit der Montage des eigentlichen Amaturenblocks nach dem Einschweißen der Bolzen in die Schiene eingeschoben werden und mit dieser gemeinsam auf dem unteren der Bolzen gehaltert werden, entfällt auch das bei der bisherigen Konstruktion notwendige Nachschneiden von Gewinden nach dem Verzinken des zunächst eingeschweißten Erdungsbügels. Die hierfür bisher angefallenen hohen Transportkosten entfallen also völlig.

Die Klemmelemente können dabei in besonders einfacher Weise als Federblechringe ausgebildet sein, die einfach auf die Bolzen aufgesteckt werden und beim Andrükken die Schiene gegen die Innenwand des Stahlrohrmastes verklemmen. Die gleichzeitige Klemmhalterung auch des Erdungsbügels, der auf den unteren Bolzen zusammen mit der Schiene mit aufgesteckt wird, erfordert dabei überhaupt keinen gesonderten Aufwand.

In Weiterbildung der Erfindung hat es sich dabei als besonders vorteilhaft erwiesen, eine Langlochausnehmung - das Vorsehen einer Langlochausnehmung erspart allzu exakte Positionierungen der Bolzen zueinander - durch einen zum unteren Stirnende der Tragschiene offenen Schlitz zu bilden. Dies ermöglicht nicht nur ein sehr einfaches Aufsetzen der Schiene auf die Bolzen, sondern auch ein sehr einfaches gleichzeitiges Mitauf- und -einstecken des Erdungsbügels.

Durch die Anordnung eines der Bolzen am unteren Ende der Tragschiene, während der andere Bolzen relativ weit vom oberen Ende der Tragschiene entfernt angeordnet sein kann, lassen sich mit der erfindungsgemäßen Montage Tragschienen durch ein Fenster im Stahlrohrmast montieren, die sehr viel länger sind als die Längser-streckung der Fenster-Öffnung, wobei aber gleichzeitig die obere Schiebemutter bis zum oberen Ende der Tragschiene bewegbar ist, so daß relativ große - jedenfalls sehr viel längere als bisher - Armaturenblöcke auf einer solchen Tragschiene gehaltert werden können.

Schließlich liegt es auch noch im Rahmen der Erfindung, das freie Ende des Erdungsbügels mit der Gewindebohrung für die Erdungsschraube um ca. 45° gekröpft abzuwinkeln, so daß eine bequeme Betätigung der Erdungsschrauben auch dann möglich ist, wenn der Erdungsbügel unterhalb der Unterkante der Fensteröffnung liegt.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

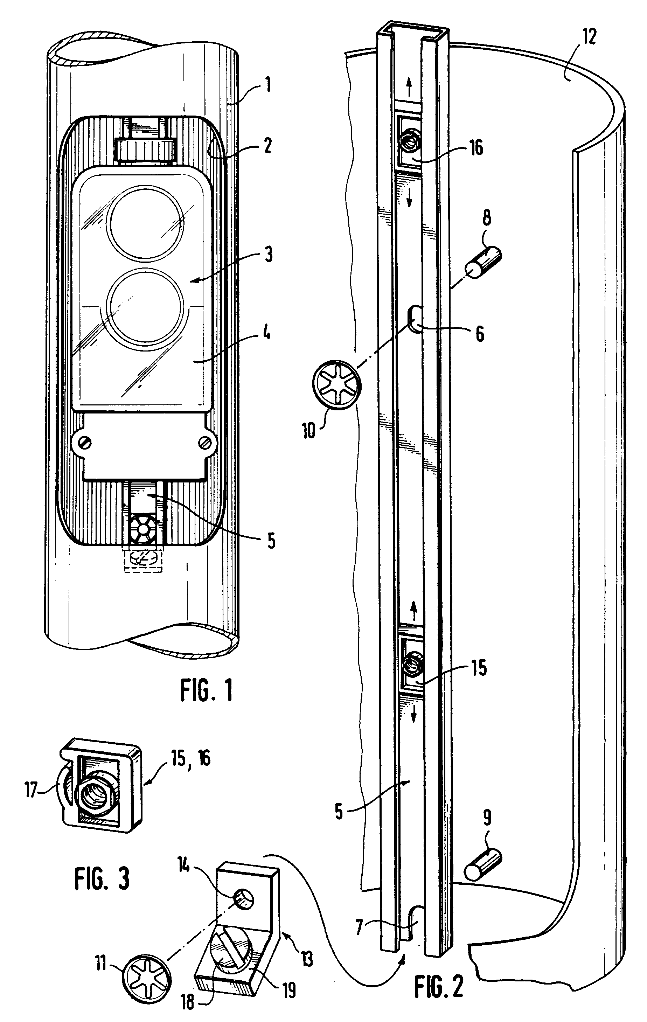

- Fig. 1: eine Aufsicht auf den offenen Fenster-Öffnungsabschnitt eines Stahlrohrmasts mit eingesetztem, auf einer Tragschiene gehaltertem Amaturenblock,
- Fig. 2: eine vergrößerte perspektivische Explosionsdarstellung eines Ausschnitts des Stahlrohmasts zur Verdeutlichung der Tragschienenhalterung,
- Fig. 3: eine perspektivische Ansicht einer Schiebemutter,
- Fig. 4: einen vergrößerten Längsschnitt durch den Stahlrohrmast in einer Aufsetzstellung vor der Befestigung des Amaturenblocks.

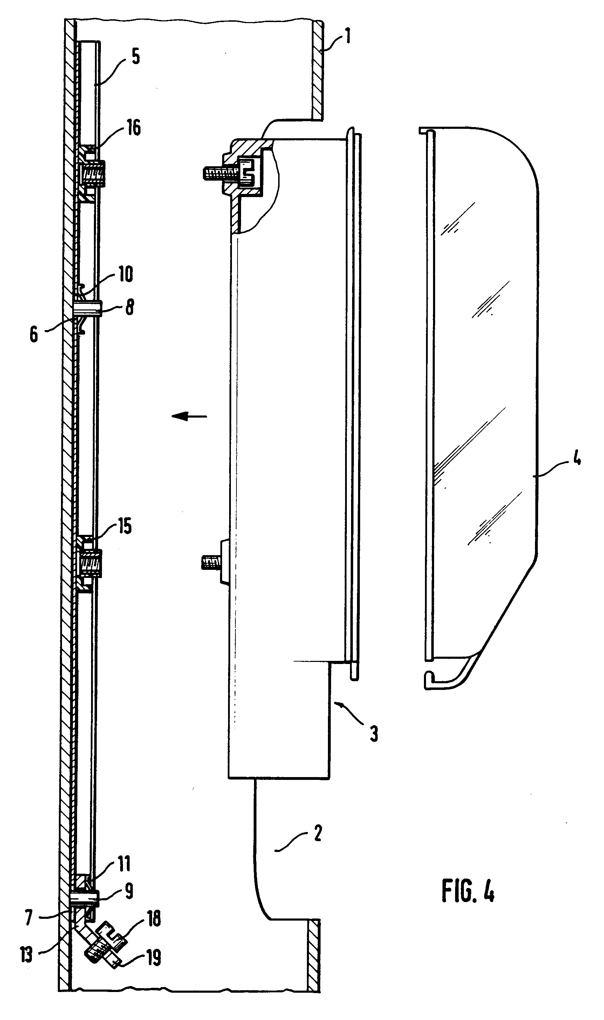

Der gezeigte Stahlrohmast 1 weist in üblicher Weise eine Fenster-Öffnung 2 auf, durch welche ein Armaturenblock 3 mit einer im dargestellten Ausführungsbeispiel durchsichtigen Haube 4, der neben Sicherungen eine Reihe von Kabelanschlüssen und sonstigen elektrischen Bauteilen aufnehmen kann, montiert und gewartet werden kann. Zu diesem Zweck ist eine Norm-C-Schiene 5 vorgesehen, die erfindungsgemäß mit einer oberen Aufstecköffnung 6 und einer unteren, als zum Stirnende offener Schlitz ausgebildeten Aufstecköffnung 7 versehen ist, mit Hilfe deren sie auf zwei beabstandet in den Stahlrohrmast eingeschweißte Bolzen 8 und 9 aufgesteckt werden kann. Die eigentliche Halterung erfolgt dann durch Federklemmringe 10 bzw. 11, von denen der erstere die Schiene direkt gegen die Innenwand 12 des Stahlrohrmasts drückt, während der Federklemmring 11 auf den in das untere Ende der Tragschiene 5 eingeschobe nen Abschnitt 13 drückt, der durch eine auf den unteren Bolzen 9 aufsteckbare Bohrung 14 gemeinsam mit dem unteren Schienenende montiert werden kann. Bei 15 und 16 sind zwei an sich bekannte Schiebemuttern mit einem Klemmfederschenkel 17, der sie an jeder gewünschten Stelle der Schiene 5 festhält, bezeichnet, mit deren Hilfe (vergl. insbesondere Fig. 4) der Armaturenblock 3 an der Schiene angeschraubt wird. Mit dem Anschrauben erfolgt die eigentliche Verklemmung der Schiebemuttern 15, 16 in der Tragschiene 5 unter Einklemmung der aufeinander zugewinkelten Endabschnitte der C-Schiene zwischen den Schiebemuttern und dem Boden des Armaturenblocks. Durch die besondere Ausbildung der Halterung der Tragschiene 5 kann die obere Schiebemutter 16 nicht nur bis zum oberen Ende der Tragschiene 5 verschoben werden, sondern es können auch entsprechend lange Armaturenblöcke auf der Schiene gehaltert werden, was bei den bisher notwendigen, im Bereich der Oberkante der Öffnung 2 liegenden, die Schiene vorne übergreifenden U-Bügeln selbstverständlich nicht der Fall war. Bei sehr kurzen Armaturblöcken setzt man die obere Schiebemutter einfach um, so daß sie ebenso wie die untere Schiebemutter 15 zwischen den beiden Bolzen 8 und 9 liegt. Durch die erfindungsgemäße Ausbildung des Erdungsbügels als loses Bauteil, welches gemeinsam mit dem unteren Ende der Tragschiene 5 im Stahlrohrmast gehaltert werden kann, läßt sich die Gewindebohrung für die Erdungsschraube 18 im freien Abschnitt 19 anordnen, der darüber hinaus durch eine Kröpfung um etwa 45° die einfache Möglichkeit einer Betätigung von außen bietet. Ein Schraubendreher läßt sich durch diese Kröpfung auch dann noch sehr einfach ansetzen, wenn der Erdungsbügel ein ganzes Stück unterhalb der Unterkante der Fenster-Öffnung 2 liegen sollte.

## Patentansprüche

1. Stahlrohmast mit einer Öffnung zur Montage und Wartung von Kabelanschlüssen, Sicherungen od.dgl., die als Armaturblock auf einer an der der Öffnung gegenüberliegenden Innenwand einsteckbar befestigten, vorzugsweise als Norm-C-Schiene ausgebildeten Tragschiene über Schiebemuttern montiert sind, wobei ein Erdungsbügel in das untere Tragschienenende eingreift, dadurch gekennzeichnet, daß die Tragschiene (5) auf zwei beabstandet in das Rohr eingeschweißten Bolzen (8, 9) gehaltert ist, wobei der untere Bolzen (9) gleichzeitig den als loses Bauteil in die Schiene (5) eingeschobenen Erdungsbügel (13) halternd durchsetzt.

2. Stahlrohrmast nach Anspruch 1, dadurch gekennzeichnet, daß die Tragschiene (5) mittels auf die sie in Ausnehmungen (6, 7), von denen die eine als Langloch ausgebildet ist, durchsetzenden Bolzen (8, 9) aufgesteckten Klemmelementen (10, 11) gehaltert ist.

3. Stahlrohrmast nach Anspruch 2, dadurch gekennzeichnet, daß die Langlochausnehmung (7) durch einen zum unteren Stirnende der Tragschiene (5) offenen Schlitz gebildet ist.

4. Stahlrohmast nach einem der Ansprüche 1 bis 3, dadurch gekennzeichnet, daß das freie Ende (19) des Erdungsbügels mit der Gewindebohrung für die Erdungsschraube (18) um ca. 45^{°} gekröpft ist.

## Claims

1. Steel tube mast, having an aperture for the mounting and maintenance of cable connections, fuses or the like, which are mounted via sliding nuts as a mounting block on a mounting rail insertibly fixed to the inner wall opposite the aperture and preferably formed as a standard C-rail, an earthing clip engaging in the lower mounting rail end, characterised in that the mounting rail (5) is mounted on two bolts (8, 9) welded into the tube and spaced apart, the lower bolt (9) simultaneously penetrating the earthing clip (13) - inserted as a loose component in the rail (5) - so as to hold same.

2. Steel tube mast according to claim 1, characterised in that the mounting rail (5) is mounted by means of gripping elements (10, 11) mounted on the bolts (8, 9) penetrating them in recesses (6, 7), one of which is formed as an elongate hole.

3. Steel tube mast according to claim 2, characterised in that the elongate hole recess (7) is formed by a slot which is open to the lower end face of the mounting rail (5).

4. Steel tube mast according to one of claims 1 to 3, characterised in that the free end (19) of the earthing clip with the threaded bore for the earthing screw (18) is bent through approx. 45°.

## Revendications

1. Mât tubulaire en acier comportant une ouverture pour le montage et l'entretien de raccords de câbles, de coupe-circuit ou analogues, qui sont montés sous la forme d'un bloc d'armature, au moyen d'écrous coulissants, sur un rail de support fixé de manière à pouvoir être enfiché sur la paroi intérieure située à l'opposé de l'ouverture, et réalisé de préférence sous la forme d'un rail en C normalisé, un étrier de mise à la terre s'engageant dans l'extrémité inférieure du rail de support, caractérisé en ce que le rail de support (5) est retenu sur deux tétons (8,9) qui sont soudés à distance dans le tube, le téton inférieur (9) traversant simultanément, tout en le retenant, l'étrier (13) de mise à la terre, qui est inséré en tant que composant mobile dans le rail (5).

2. Mât tubulaire en acier selon la revendication 1, caractérisé en ce que le rail de support (5) est retenu au moyen d'éléments de serrage (10,11) emmanchés sur les tétons (8,9) qui traversent le rail de support au niveau d'ouvertures (6,7), dont l'une est agencée sous la forme d'un trou allongé.

3. Mât tubulaire en acier selon la revendication 2, caractérisé en ce que l'ouverture (7) en forme de trou allongé est formée par une fente ouverte en direction de l'extrémité frontale inférieure du rail de support (5).

4. Mât tubulaire en acier selon l'une des revendications 1 à 3, caractérisé en ce que l'extrémité libre (19) de l'étrier de mise à la terre qui comporte le perçage taraudé servant à recevoir la vis (18) de mise à la terre, est coudée à environ 45°.
